Europäisches Patentamt

European Patent Office

Office européen des brevets

(11) Publication number: **0 052 708**
**B1**

# EUROPEAN PATENT SPECIFICATION

(45) Date of publication of patent specification: **27.12.84**

(51) Int. Cl.³: **G 11 B 5/12, G 11 B 5/42**

(21) Application number: **81107297.4**

(22) Date of filing: **16.09.81**

(54) Single track magnetic head assembly.

(30) Priority: **20.11.80 US 208766**

(43) Date of publication of application:
**02.06.82 Bulletin 82/22**

(45) Publication of the grant of the patent:
**27.12.84 Bulletin 84/52**

(84) Designated Contracting States:
**DE FR GB**

(56) References cited:
**DE-A-1 549 103**
**DE-A-2 751 211**
**US-A-3 229 355**
**US-A-3 700 827**
**US-A-4 037 264**

**IBM TECHNICAL DISCLOSURE BULLETIN, vol.
7, no. 11, April 1965, page 993 New York, U.S.A.
W.T. FROST et al.: "Fabrication of narrow track
width, high-density ferrite head"**

(73) Proprietor: **International Business Machines
Corporation
Old Orchard Road
Armonk, N.Y. 10504 (US)**

(72) Inventor: **Chow, William Wai-Chung
1440 S. Sumatra Place
Tucson Arizona 85710 (US)**
Inventor: **Dunn, Larry Park
8920 East Bear Creek Drive
Tucson Arizona 85715 (US)**

(74) Representative: **Hobbs, Francis John
IBM United Kingdom Patent Operations Hursley
Park
Winchester, Hants, SO21 2JN (GB)**

Courier Press, Leamington Spa, England.

**0 052 708**

56 References cited:
IBM TECHNICAL DISCLOSURE BULLETIN, vol. 15, no. 10, March 1973, pages 3252-3254 New York, U.S.A. M. KLEIN: "Narrow track thin film recording head"
PATENTS ABSTRACTS OF JAPAN, vol. 1, no. 57, 3rd June 1977, page 3773E76
PATENTS ABSTRACTS OF JAPAN, vol. 1, no. 21, 25th March 1977, page 921E76
PATENTS ABSTRACTS OF JAPAN, vol. 3, no. 28(E-96), 9th March 1979 page 8E 96
PATENTS ABSTRACTS OF JAPAN, vol. 2, no. 1, 5th January 1978, page 9488E77
PATENTS ABSTRACTS OF JAPAN, vol. 1, no. 160, 19th December 1977, page 8757E77
PATENTS ABSTRACTS OF JAPAN, vol. 1, no. 160, 19th December 1977, page 8757E77

## Description

This invention relates to a single track magnetic head assembly.

Presently known ferrite core heads require precise machining and alignment and an undue number of processing steps during manufacture. Nevertheless, problems arise due to processing variability and off-specification construction that result in nonuniformity during mass production of the heads. These problems lead to losses due to "out-of-spec" heads, and poor signal performance during magnetic head operation.

Furthermore, when manufacturing ferrite heads with extremely small transducing gaps to achieve very narrow data track widths in order to increase track density, various difficulties are encountered with present day head designs and processes. In addition, it is not feasible during production to test magnetic heads made by current techniques for magnetic and other physical properties until the head assembly is completed. Therefore, although a component to be assembled with the head may not have the specified magnetic characteristics, it is not until the completed head assembly is tested that the defect can be detected.

The article on page 993 of the IBM Technical Disclosure Bulletin, Volume 7, No. 11, April 1965 discloses a single track magnetic head assembly comprising a thin film layer of magnetic material sandwiched between a pair of non-magnetic outer portions. One of the pair of non-magnetic outer portions is U-shaped and disposed so that the outer surface of its base forms part of the face of the head assembly. The other of the pair of non-magnetic outer portions is shorter than the one of the pair. Electrical coil means is wound about a recessed section of a magnetic bridge piece which abuts the shorter of the pair of non-magnetic outer portions and is contiguous with the thin film layer of magnetic material. The shorter outer portion is comprised by a pair of substantially rectangular pieces bonded end to end. The thin film layer of magnetic material is bonded to, and covers, a substantially rectangular surface of the shorter outer portion. Thus, the thin magnetic layer is also substantially rectangular.

A single track magnetic head assembly comprising a thin film layer of magnetic material sandwiched between a pair of non-magnetic outer portions and having a transducing gap, one of the pair of non-magnetic outer portions being U-shaped and disposed so that the outer surface of its base forms part of the face of the head assembly and the other of the pair of non-magnetic outer portions being shorter than said one of the pair, a magnetic bridge piece in abutment with the shorter of the pair of non-magnetic outer portions and contiguous with the thin film layer of magnetic material, and electrical coil means wound about a recessed section of the magnetic bridge piece, is characterised, according to the invention, in that said other of the pair of non-magnetic outer portions is also U-shaped with its base aligned with the base of said one of the pair so that the outer surfaces of both the bases form part of the face of the head assembly, that said one (i.e. the longer one) of the pair of non-magnetic outer portions serves as a substrate on which the thin film layer is deposited so that the thin film layer is also U-shaped, and that the thin film layer is provided with a slot which extends from the inner U-shaped surface of its base so as to form said gap.

How the invention can be carried out will now be described by way of example, with reference to the accompanying drawings, in which:—

FIGURE 1 is an isometric view of an assembled magnetic head assembly, made in accordance with this invention.

FIGURE 2 is an exploded view of the magnetic head assembly of FIG. 1, prior to lapping and contouring;

FIGURE 3A—I depict a series of steps performed during the manufacture of the magnetic head assembly;

FIGURES 4A—D represent steps in the lapping operation that achieve the desired final throat height of the magnetic head assembly, and FIGURE 4E is a curve related to the testing of the head assembly at each step;

FIGURE 5A is a top view of the magnetic head assembly of FIG. 1; FIGURE 5B is a front view of the magnetic head assembly; FIGURE 5C is a side view of the magnetic head assembly; and FIGURE 5D is a bottom view of the magnetic head assembly; and

FIGURES 6A—B illustrate the types of housings that may accommodate the magnetic head assembly of FIG. 1.

Similar numerals refer to similar elements throughout the drawings.

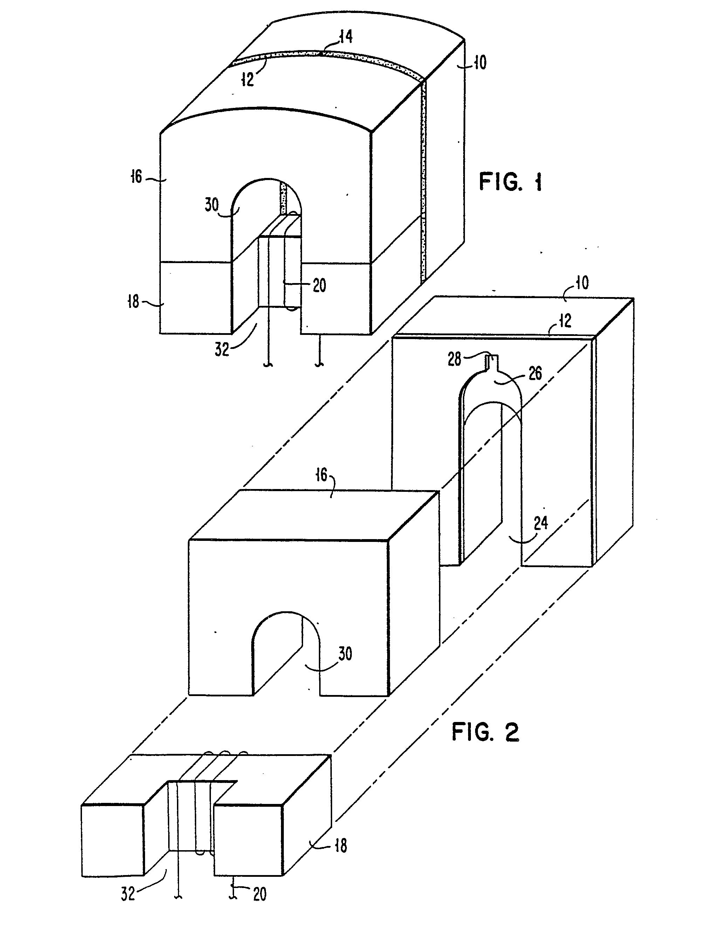

With reference to FIG. 1, a single track magnetic head assembly comprises a non-magnetic base portion 10, and an epitaxial single crystal ferrite layer 12 deposited on a surface of the portion 10. A transducing gap 14 is formed in the magnetic ferrite layer 12, by electron beam lithography, for example. The thickness of the ferrite layer 12 defines the track width of the magnetic head. A non-magnetic top portion 16 is securely bonded to the top portion of the ferrite layer 12 and base portion 10, and a magnetic bridge 18 is joined to the ferrite layer 12 and base portion 10 at the bottom of the portion 16. The base and top portions may be made from silicon, sapphire, or manganese gallate, while the magnetic may be made from manganese-zinc ferrite, or nickel-zinc ferrite, or Permalloy, by way of example. A prewound coil 20 for connection to signal circuitry is coupled to a central section 32 of the bridge 18.

With reference to FIG. 2, the parts of the magnetic head assembly of FIG. 1 are illustrated prior to final assembly and prior to lapping and contouring. The base portion 10 is formed with an arched channel 24, and the ferrite layer 12 has an arched slot 26 having a span substantially the same as that of the arch of the channel 24, but of greater height. At the top of the slot 26, there is a cutout 28 that is used in the throat height lapping operation.

The top portion 16 has an arched passage 30 that closely matches the shape of the upper portion of the arched channel 24. This passage 30 and a recessed section 32 in the magnetic bridge 18 provide space for the prewound coil 20, which is coupled to the bridge 18.

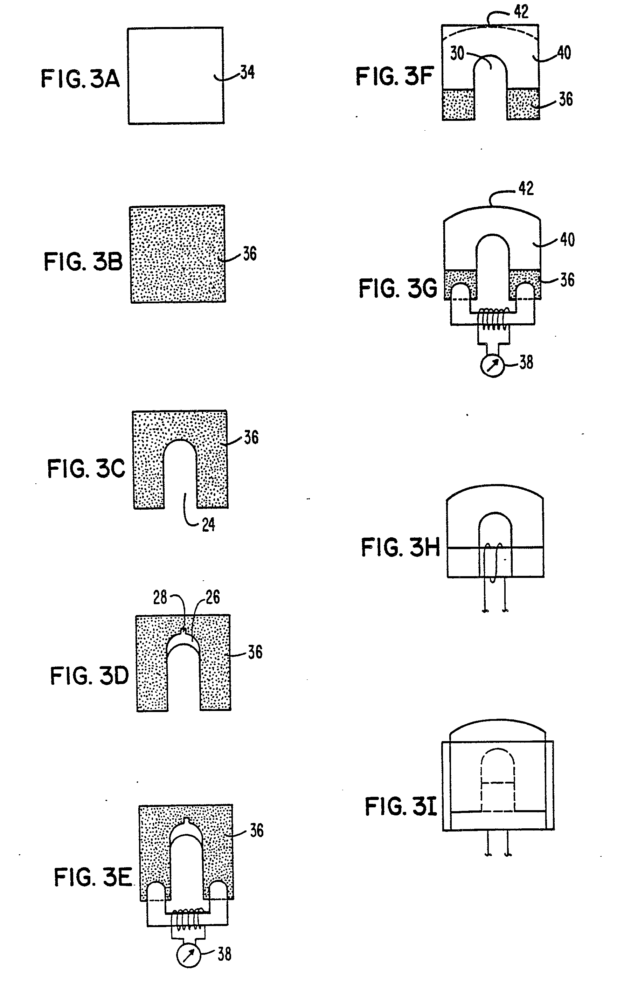

FIG. 3 illustrates the process steps employed in making a single track magnetic head assembly. FIG. 3A depicts a substrate 34 that serves as the nonmagnetic base portion for the head assembly. The substrate is made from silicon or a non-magnetic ceramic material, such as manganese gallate, by way of example. A layer of epitaxial single crystal ferrite 36 is deposited on the substrate, as in FIG. 3B, and an arched channel 24 is cut through the ferrite and substrate assembly, as in FIG. 3C. The ferrite layer, which serves as the magnetic core for the head, is further shaped by photolithography to define a higher arch 26 and a cutout 28, as in FIG. 3D.

At this point, the magnetic properties of the ferrite core may be tested by means of an inductance measuring probe device 38, which is coupled to the ferrite layer, as in FIG. 3E. The test probe 38, which comprises a coil with a magnetic bar through the coil, bridges across the lower ends of the arch legs of the ferrite layer 36. Other tests and measurements may be made of the ferrite layer assembly prior to completion of the magnetic head. If the ferrite core does not meet the prescribed specifications, the assembly is not processed further.

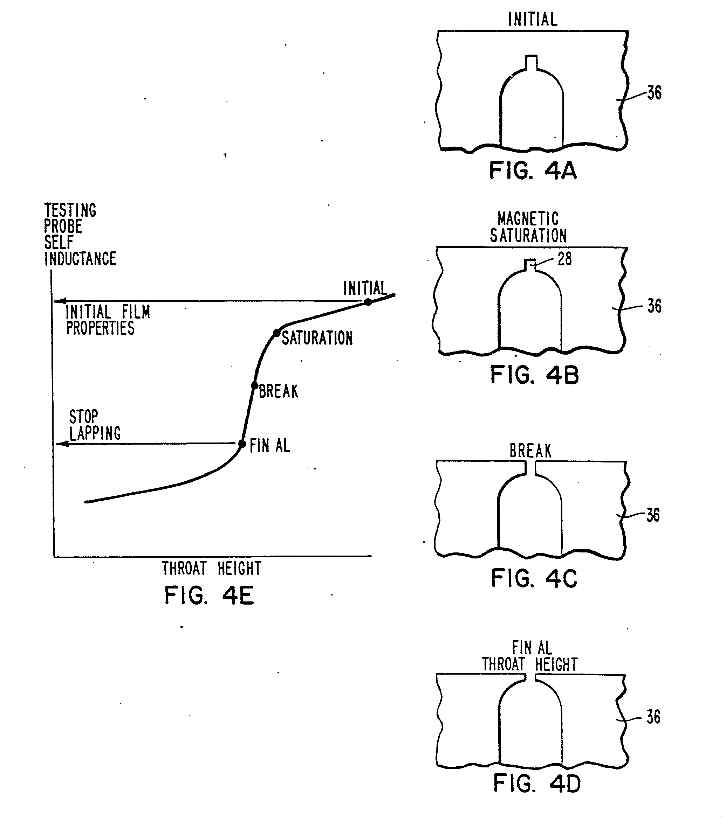

As shown in FIG. 3F, a non-magnetic top portion 40 is joined to the upper portion of the ferrite layer 36 and substrate 34. The arch 30 of portion 40 closely matches the upper portion of the arched slot 26 of the ferrite layer 36. The next step is the lapping of the face 42 of the structure to a desired throat height, as represented in FIG. 3G, and more specifically, in FIGS. 4A—D.

With the test probe device 38 still connected, the head face is contoured and lapped. As the throat height is decreased, the reluctance of the magnetic circuit increases, and the self-inductance in the probe is decreased, as indicated in FIG. 4E. The lapping is completed when precise core reluctance is obtained. As an alternative, the electrical resistance of the magnetic ferrite layer may be measured. When the break in the cutout section 28 occurs, as shown in FIG. 4C, the resistance becomes infinite.

The assembly is monitored during the contouring and lapping processes by inductance measurements until the desired contour and throat height is reached, as in FIG. 3G. The magnetic bridge piece 18 and the prewound coil 20 are then secured to the assembly by epoxy adhesive, for example, as in FIG. 3H. Finally, as shown in FIG. 3I, the magnetic head assembly is installed in a non-magnetic housing 44, which may be made of aluminium, that encompasses the head assembly to shield the head from spurious signals.

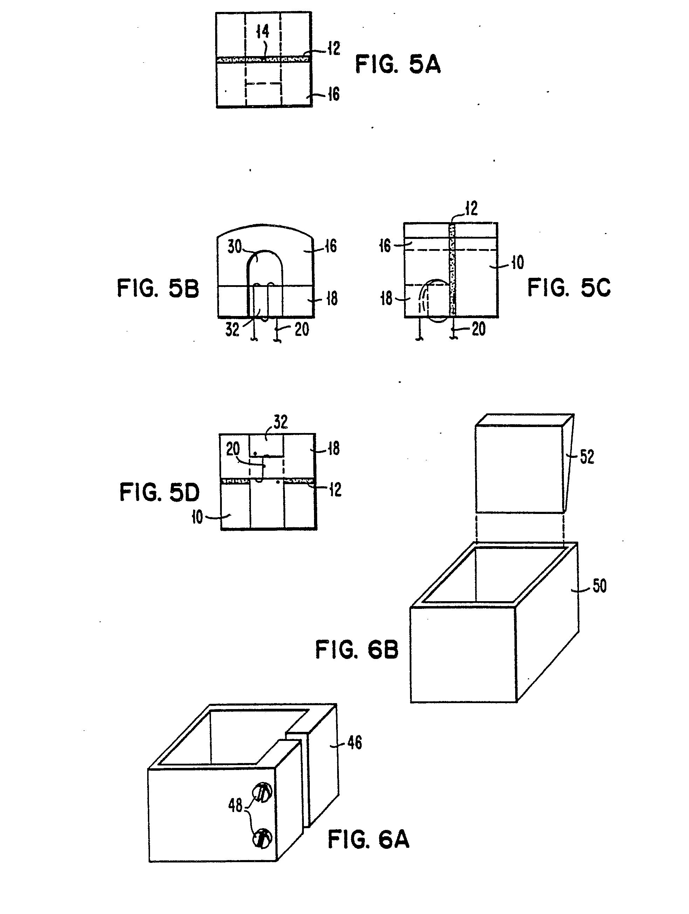

FIGS. 5A—5D illustrate respectively the top, front, side and bottom views of the head assembly without the housing. FIG. 6A shows one type of non-magnetic housing 46 having screws 48 to secure the head assembly within the housing walls. FIG. 6B is another example of a housing 50 that employs a wedge 52 to hold the head assembly securely.

By virtue of the magnetic head configuration and the process used to achieve the design, the widths of the data tracks registered on a magnetic medium, such as a disk or tape, may be of the order of 1 micron. Inspection and test of the core can be accomplished before performing the expensive steps of contouring and attaching the electrical coil structure. Also, there is no need for complex window winding of the electrical coil. The prewound coil may be used for inductance measurements during the throat height lapping process.

For example, the invention lends itself to foil-type cores, vacuum deposited Permaloy cores, as well as epitaxial single crystal ferrite cores. Also, rectangular slots and channels may be employed instead of the arched forms. With this invention, no back gap is formed, thus adding to head efficiency. A significant advantage of this invention is the realization of uniformity of the head cores.

**Claims**

1. A single track magnetic head assembly comprising a thin film layer (12) of magnetic material sandwiched between a pair of non-magnetic outer portions (10, 16) and having a transducing gap (14), one (10) of the pair of non-magnetic outer portions being U-shaped and disposed so that the outer surface of its base forms part of the face of the head assembly and the other (16) of the pair of non-magnetic outer portions being shorter than said one (10) of the pair, a magnetic bridge piece (18) in abutment with the shorter (16) of the pair of non-magnetic outer portions and contiguous with the thin film layer (12) of magnetic material, and electrical coil means (20) wound about a recessed section (32) of the magnetic bridge piece (18), characterised in that said other (16) of the pair of non-magnetic outer portions is also U-shaped with its base aligned with the base of said one of the pair so that the outer surfaces of both the bases form part of the face of the head assembly, that said one (10) (i.e. the longer one) of the pair of non-magnetic outer portions serves as a substrate on which the thin film layer (12) is deposited so that the thin film layer (12) is also U-shaped, and that the thin film layer (12) is provided with a slot (26) which extends from the inner U-shaped surface of its base so as to form said gap (14).

2. A magnetic head assembly as claimed in claim 1, in which the inner surface of the base of each of the outer portions is rounded and the thin film layer is rounded with the same curvature as the inner surfaces of the bases of the outer portions.

3. A magnetic head assembly as claimed in claim 1 or claim 2, wherein said thin film layer is formed from epitaxial single crystal ferrite.

4. A magnetic head assembly as claimed in any preceding claim, wherein said face of said head assembly is arcuately contoured.

5. A magnetic head assembly as claimed in any preceding claim, wherein said thin film layer defines the width of data tracks registered on a magnetic medium by said magnetic head assembly.

6. A magnetic head assembly as claimed in any preceding claim, including a non-magnetic housing for securing said head assembly.

7. A magnetic head assembly as claimed in any preceding claim, wherein the pair of non-magnetic outer portions are made from silicon, or sapphire, or manganese gallate.

**Revendications**

1. Ensemble de tête magnétique monopiste comportant une couche en forme de pellicule mince (12) d'un matériau magnétique priseen sandwich entre un couple de parties extérieures non magnétiques (10, 16) et possédant un entrefer de conversion (14), une partie (10) du couple des parties extérieures non magnétiques étant en forme de U et disposée de telle sorte que la surface extérieure de sa base fait partie de la face de l'ensemble de tête et l'autre partie (16) du couple des parties extérieures non magnétiques étant plus courte que ladite partie (10) du couple, un élément formant pont magnétique (18) situé en aboutement avec la partie la plus courte (16) du couple de parties extérieures non magnétiques et étant adjacent à la couche en forme de pellicule mince (12) de matériau magnétique, et des moyens (20) en forme de bobinage électrique enroulés sur une section en renfoncement (32) de l'élément formant pont magnétique (18), caractérisé en ce que ladite autre partie (16) du couple de parties extérieures non magnétiques est également réalisée en forme de U, dont la base est alignée avec la base de la première des couples desdites parties de telle sorte que les surfaces extérieures des deux bases font partie de la face de l'ensemble de tête, de sorte que ladite partie (10) (c'est-à-dire la plus longue) du couple desdites parties extérieures non magnétiques sert de substrat sur lequel la couche en forme de pellicule mince (12) est déposée de telle sorte que cette couche en forme de pellicule mince (12) est également en forme de U et que cette couche (12) est munie d'une fente (26) qui s'étend depuis la surface intérieure en forme de U de sa base de manière à former ledit entrefer (14).

2. Ensemble de tête magnétique tel que revendiqué dans la revendication 1, dans laquelle la surface intérieure de la base de chacune des parties extérieures est arrondie et la couche en forme de pellicule mince est arrondie avec la même courbure que les surfaces intérieures des bases des parties extérieures.

3. Ensemble de tête magnétique tel que revendiqué dans la revendication 1 ou 2, dans lequel ladite couche en forme de pellicule mince est constituée par un ferrite épitaxial monocristallin.

4. Ensemble de tête magnétique tel que revendiqué dans l'une quelconque des revendications précédentes, dans lequel ladite face dudit ensemble de tête possède un contour incurvé.

5. Ensemble de tête magnétique tel que revendiqué dans l'une quelconque des revendications précédentes, dans lequel ladite couche en forme de pellicule mince définit la largeur des pistes de données, enregistrées sur un support magnétique par ledit ensemble de tête magnétique.

6. Ensemble de tête magnétique tel que revendiqué dans l'une quelconque des revendications précédentes, incluant un boîtier non-magnétique servant à fixer ledit ensemble de tête.

7. Ensemble de tête magnétique tel que revendiqué dans l'une quelconque des revendications précédentes, dans lequel le couple des parties extérieures non magnétiques est constitué par du silicium ou du saphir ou du gallate de manganèse.

**Patentansprüche**

1. Einspur-Magnetkopfaufbau mit einer Dünnfilmschicht (12) aus magnetischem Material zwischen einem Paar von nicht-magnetischen äußeren Abschnitten (10, 16), welche einen Wandlerspalt (14) aufweist, wobei einer (10) des Paares nicht-magnetischer äußerer Abschnitte U-förmig und so angeordnet ist, daß die Außenfläche seiner Basis einen Teil der Fläche des Kopfaufbaues bildet und der andere (16) des Paares nicht-magnetischer äußerer Abschnitte kürzer als der eine (10) des Paares ist, einem Magnetbrückenstück (18) anstoßend an den kürzeren (16) des Paares nicht-magnetischer äußerer Abschnitte und angrenzend an die Dünnfilmschicht (12) aus magnetischem Material, und elektrischen Spulenmitteln (20), welche um einen zurückgesetzten Teilabschnitt (32) des Magnetbrückenteils (18) gewunden sind, dadurch gekennzeichnet, daß der andere (16) des Paares nicht-magnetischer äußerer Abschnitte ebenfalls U-förmig mit auf die Basis des einen des Paares ausgerichteter Basis ist, so daß die Außenflächen beider Basen einen Teil der Fläche des Kopfaufbaus bilden, daß der eine (10) (d.h. der Längere) des Paares nicht-magnetischer äußerer Abschnitte als Substrat, auf welchem die Dünnfilmschicht (12) abgeschieden ist, dient, so daß die Dünnfilmschicht (12) ebenfalls U-förmig ist, und daß die Dünnfilmschicht (12) mit einem Schlitz (26) versehen ist, welcher sich von der inneren U-förmigen Fläche ihrer Basis wegerstreckt, um so den Spalt (14) zu bilden.

2. Magnetkopfaufbau nach Anspruch 1, bei welchem die Innenfläche der Basis eines jeden der äußeren Abschnitte gerundet ist und die Dünnfilmschicht mit der gleichen Krümmung wie die Innenflächen der Basen der äußeren Abschnitte gerundet ist.

3. Magnetkopfaufbau nach Anspruch 1 oder 2, bei welchem die Dünnfilmschicht aus einem epitaxialen Einkristallferrit gebildet ist.

4. Magnetkopfaufbau nach irgendeinem vorstehenden Anspruch, bei welchen die Fläche des Kopfaufbaues gekrümmt konturiert ist.

5. Magnetkopfaufbau nach irgendeinem vorstehenden Anspruch, bei welchem die Dünnfilmschicht die Breite von Datenspuren, die durch den Magnetkopfaufbau auf einem magnetischen Medium registriert werden, bestimmt.

6. Magnetkopfaufbau nach irgendeinem vorstehenden Anspruch, welcher ein nicht-magnetisches Gehäuse zur Befestigung des Kopfaufbaues enthält.

7. Magnetkopfaufbau nach irgendeinem vorstehenden Anspruch, bei welchem das Paar nicht-magnetischer äußerer Abschnitte aus Silizium oder Saphir oder Mangangallat besteht.

FIG. 1

FIG. 2

**0 052 708**

FIG. 3A — 34

FIG. 3B — 36

FIG. 3C — 36 — 24

FIG. 3D — 28, 26, 36

FIG. 3E — 36, 38

FIG. 3F — 42, 30, 40, 36

FIG. 3G — 42, 40, 36, 38

FIG. 3H

FIG. 3I

2

INITIAL

FIG. 4A

MAGNETIC
SATURATION

FIG. 4B

TESTING
PROBE
SELF
INDUCTANCE

INITIAL

INITIAL FILM
PROPERTIES

SATURATION

BREAK

STOP
LAPPING

FIN AL

THROAT HEIGHT

FIG. 4E

BREAK

FIG. 4C

FIN AL
THROAT HEIGHT

FIG. 4D

0 052 708

FIG. 5A

FIG. 5B

FIG. 5C

FIG. 5D

FIG. 6B

FIG. 6A